# EUROPEAN PATENT APPLICATION

(11) **EP 1 452 090 A2**
(43) Date of publication of application: **01.09.2004**
(21) Application number: 04004226.9
(22) Date of filing: 25.02.2004
(51) Int. Cl.: A01K 15/02

(54) **Pet toy**

(30) Priority: 25.02.2003 US 449932 P; 23.02.2004 US 785781
(71) Applicant: Oblack, Mark, Issaquah, WA 98027 (US)
(72) Inventor: Oblack, Mark, Issaquah, WA 98027 (US)
(74) Representative: Vossius, Corinna

(57) **Abstract**

A pet toy particularly designed for a pet for playing fetch and pulling. The pull toy includes a plurality of woven strands (26) securing attached to a head (38). The head includes an opening through a portion of the strands remains secured to the head, the remaining portion of the strands extend out the opening and are of sufficient length to be grabable by a person or pet. The woven strands may be a rope body (12) having a torso (14) having arms (20) and legs (22,24) with an optional knot (36) at the distal ends of the arms and legs. In other embodiments the woven strands may form an elongated strap with or without an handle, or a head having individual strands extending from the head. In the preferred attachment, the opening of the head is divided by a rib to form two compartments. The woven strands can be positioned about the rib with apex of the strands abutting one end of the rib and remaining portions positioned on either side of the rib through the two compartments and out through the opening to extend past the head.

## Description

### RELATED APPLICATION

This application claims priority to U.S. provisional patent application serial no. 60/449,932, filed February 25, 2003, and entitled "Pet Toy."

### TECHNICAL FIELD

The present invention relates generally to pet toys. More particularly, the present invention relates to a multi-purpose pull and fetch toy for pets.

### BACKGROUND OF THE INVENTION

It is well-known that pets, particularly dogs, love to fetch and pull an object while playing with their owners. Pet toys are not only exhilarating for the pet, but exercises the pet and gives the owner an opportunity to "bond" with the animal. Woven rope or strands, regardless whether made of cotton, jute, other natural fibers, or synthetic fibers, are also known to aid in cleaning the pet's teeth. Thus, if pet toys are made of rope or other woven material, there may be benefit to the pet's oral health during play with a rope/woven strands pet toy, whether the pet is grabbing the rope/woven strands during a game of fetch or playing "tug of war." Additionally, the toy must be able to withstand abuse when pulled. Even known pet toys that have a ball or rubber or resin member and a tether are prone to disjoining during active play. Thus, a strong connection between a tether and the ball/rubber/resin member is highly desired.

### SUMMARY OF THE INVENTION

The present invention is directed to a pet toy particularly designed for humans and pets to engage in a game of fetch or tug-of-war. The multi-purpose pet toy includes a head and a fixedly-attached woven body, which may be a rope "stick person," an elongated woven handle, or a plurality of individual woven strands extending from the head. The woven body extends past the head of such an amount that can be grabbed by a human or pet for the purposes of exercising or entertaining a pet.

Each head has an opening through which the strands extend. In a preferred embodiment, a rib spans the opening within the head to form two compartments. The strands are positioned about the rib such that the strands abut the rib and anchor the strands to the head with the remaining strands positioned on both sides of the rib and out through the opening.

Other securement means include overmolding the strands within the head, clips, staples, stitching, and knots to secure the head to the woven body.

These and other advantages will become more apparent upon review of the Drawings, the Detailed Description of the Invention, and the Claims.

### BRIEF DESCRIPTION OF THE DRAWINGS

Like reference numerals are used to designate like parts throughout the several views of the drawings, wherein:
Fig. 1 is a perspective view of the pet toy of the first embodiment of the present invention illustrating a rope body with a torso, arms, and a pair of legs, and a head that is securely attached to an upper portion of the torso;
Fig. 2 is a top plan view of the head illustrating a first embodiment of attaching the head to the torso through an opening within the head in which strands of the upper portion of the rope body torso are inserted;
Fig. 3 is a top plan view similar to Fig. 2 except less the upper portion of the torso and better illustrating a rib member spanning the opening of Fig. 2 to form two openings;
Fig. 4 is a rear view of Fig. 2 and better illustrating the upper portion of the torso attached to the head about the rib member (which is hidden);
Fig. 5 is a section view taken substantially across lines 5 ― 5 of Fig. 3;
Fig. 6 is a cross-section view taken substantially across lines 6 ― 6 of Fig. 7;
Fig. 7 is section view taken substantially across lines 7 ― 7 of Fig. 2;
Fig. 8 is a section view illustrating a slightly varied rib embodiment;
Fig. 9 is a view like Fig. 8 illustrating a second alternate embodiment of attaching the head to the torso;
Fig. 10 is a view like Fig. 8 and illustrating a third alternate embodiment of attaching the head to the torso and illustrating a clip acting as an abutment;
Fig. 11 is a section view of the clip of Fig. 11 taken substantially along lines 11 ― 11 of Fig. 10;
Fig. 12 is a section view of the lower edge seat taken substantially along lines 12 ― 12 of Fig. 10 and illustrating the smaller cross-sectional area relative to the cross-sectional area of the abutment of Fig. 11;
Fig. 13 is a view like Fig. 8 illustrating a fourth alternate embodiment of the head being attached to the upper portion of the torso; and
Fig. 14 is a perspective view illustrating a pet owner and pet playing fetch or tug-of-war with the pet toy of the present invention;
Fig. 15 is a perspective view of a second embodiment of the present invention illustrating an elongated woven strap with looped end, where the woven strap opposite the looped end is attached to and extending from the head, and with an optional face on the surface of the head shown in phantom;
Fig. 16 is a rear view of a third embodiment of the present invention where rope strands are attached to and extending from the head; and
Fig. 17 is the front view of the third embodiment of Fig. 16.

### DETAILED DESCRIPTION OF THE INVENTION

The present invention is directed to a rope pet toy, primarily for use with pets, that includes a plurality of woven strands that are fixedly attached to the head and extend past the head of sufficient length to be grabable by a person or its pet.

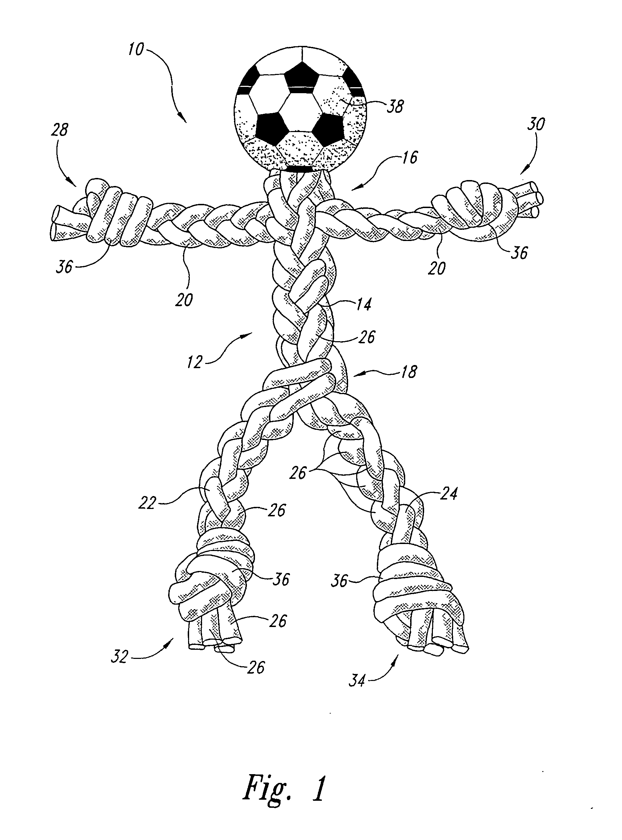

According to the first embodiment, and referring to Fig. 1, the pet toy 10 includes a body 12 that looks like a rope/woven stick figure. Body 12 includes a torso 14, which may be an elongated rope portion. Torso 14 has an upper portion 16 and a lower portion 18. Two substantially-opposing arms 20 extend outwardly of the torso 14. A pair of legs 22, 24 extend from the lower portion 18 of torso 14 such that an upper portion 26 of leg 22 and an upper portion of leg 24 generally extend from substantially the same region as the torso's lower portion 18.

In a preferred form, the rope body 12 is braided or woven in such a way that the torso has many strands 26 and that the arms and legs are braided from certain strands off the torso. In this way, the rope terminates at ends 28, 30, 32, and 34 of the arms and legs, respectively. Thus, the rope body is preferably one unitary, multi-strand, woven rope member that can take a great deal of tugging from a pet without ripping off a rope body's appendage, such as an arm or leg. In another preferred form, rope body 12 is braided where the legs are formed from the original torso strands and the arms are braided and pulled through the torso 14. One way to accomplish this is to take four double-stranded rope strands and braid the torso and the legs from those strands. A second set of rope is braided to form the arms and approximately half of the length of the second rope set is pulled through the torso to form two arms generally opposed and extending from the torso.

Also in preferred form, each end 28, 30, 32, and 34 includes a knot 36. Advantages of having a knot at substantially the end of each appendage are that the woven or braided body is less likely to unravel and the pet has something larger to sink its teeth into. Alternatively, the ends may be finished by over-molding the ends with a plastic or rubber material (with or without the knot) to keep the ends from unraveling when in use.

The rope body may be made from any traditional or non traditional rope, including cotton, jute, other natural fibers, or synthetic fibers or cord.

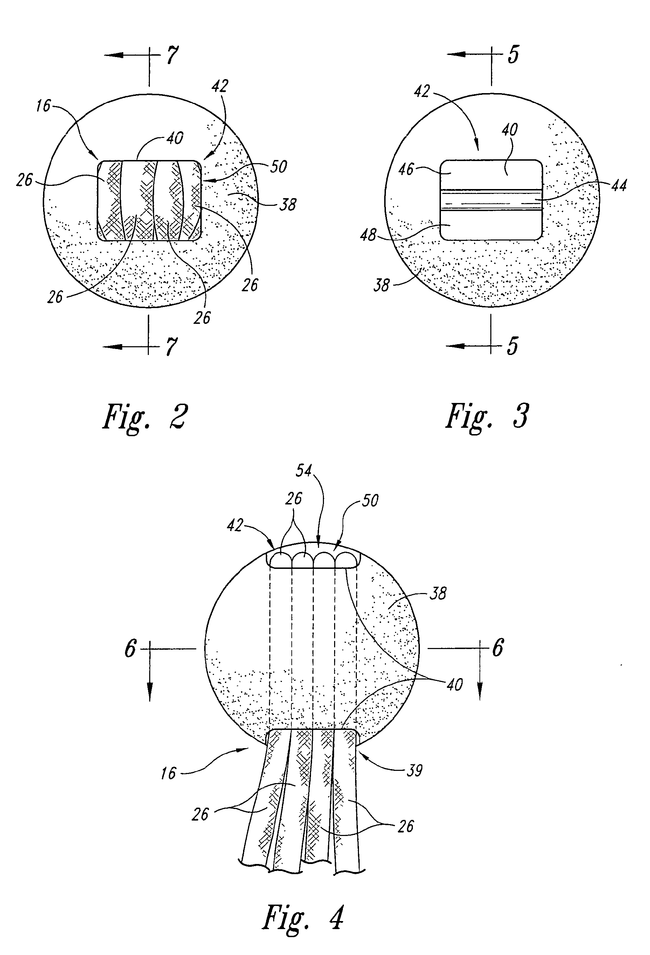

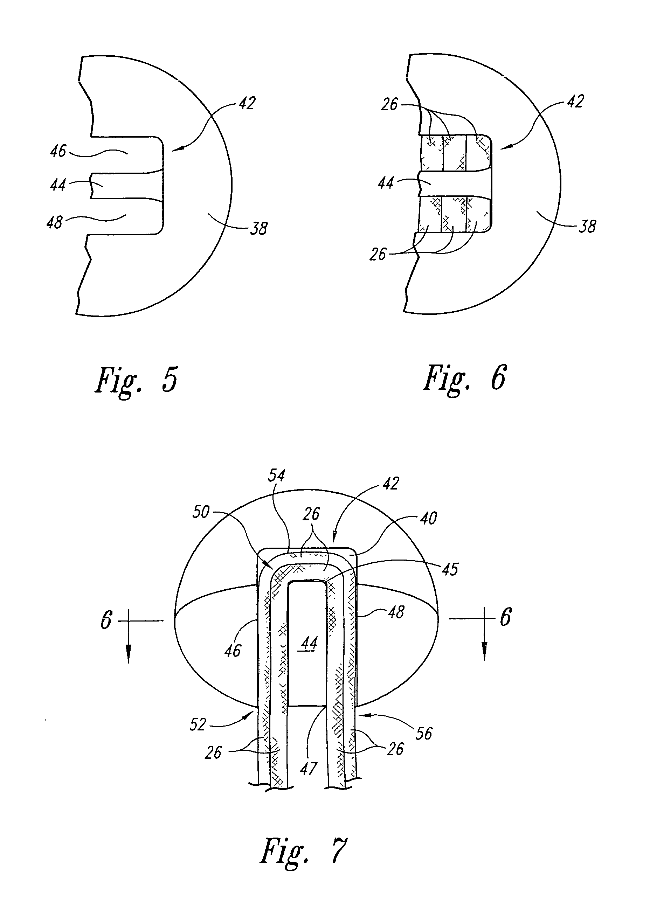

Referring also to Figs. 2-8, each pet toy further includes a head 38 in which the upper portion 16 of torso 14 is firmly attached. According to a first embodiment, each head member 38 includes an opening 40 that extends from the base 39 of head 38 and may or may not extend through a top portion 42 of head 38. Figs. 2 and 4 illustrate the embodiment where the opening optimally extends through to the top portion 42.

Within opening 40 is a generally central cross-member or rib member 44. The rib member includes an upper edge 45 and a lower edge 47. The rib member divides opening 40 into two rib member divided openings 46, 48. It is through opening 40, and, particularly, openings 46, 48 that the upper portion 16 of torso 14 is inserted in order to secure head 38 to torso 14. In a preferred form, and illustrated in Figs. 2-4, and 6-8, the upper portion 16 includes a looped member 50 in which one side 52 of the looped member is fed through opening 46 and the apex 54 of the looped member is abutted by the upper edge 45 of rib member 44. The other side 56 of looped member 50 is fed through opening 48. In this way, head 38 is secured to the torso of rope body 12 at the upper portion 16 at the looped member 50.

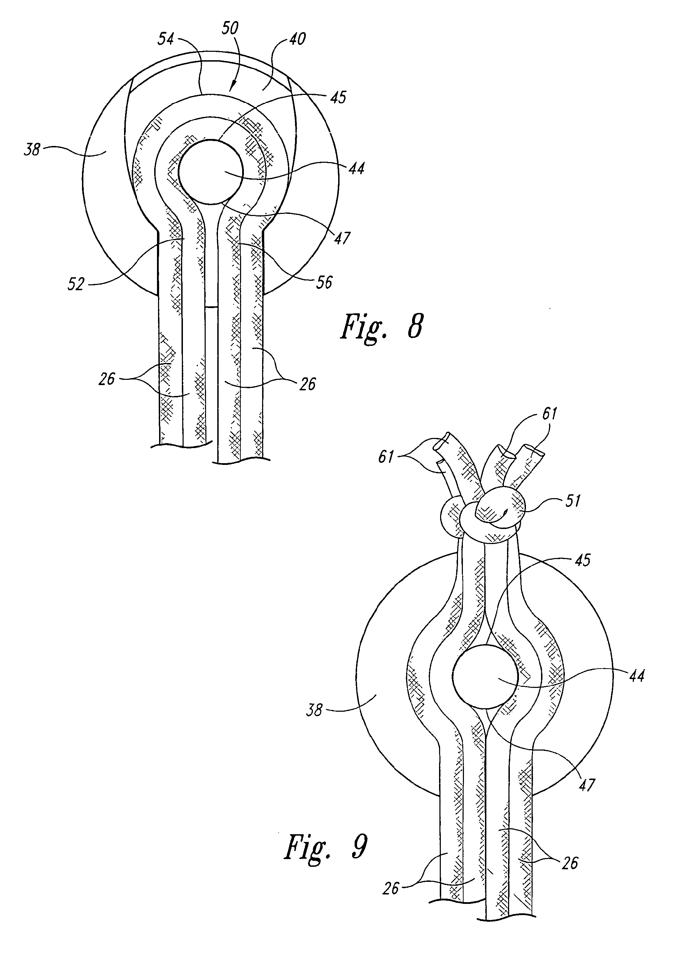

In another embodiment, the upper edge 45 of rib member 44 may be recessed from the surface of the head as best illustrated in Fig. 8. Alternatively, either edge of rib member 44 may be recessed, or both. The recessed rib member allows the woven strands to be nearly flush with the surface of the head.

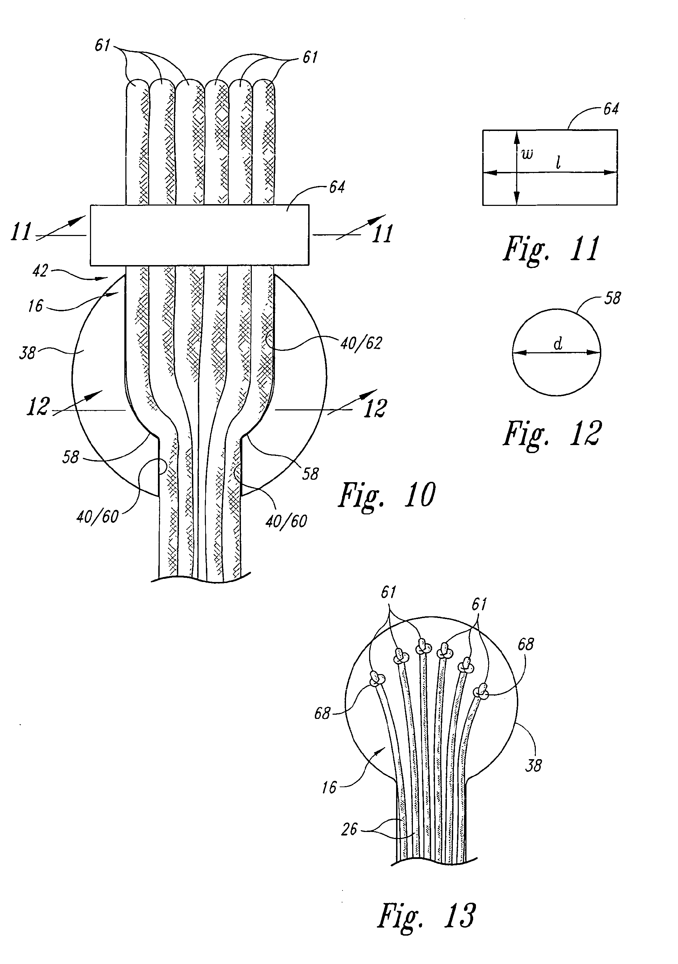

Referring to Fig. 9, a second embodiment is shown where upper portion 16 of torso 14 may consist of individual upper strands 61 of the upper portion 16 that may be divided and thread through openings 46, 48 around rib member 44. The upper strands 61 that extend past upper edge 45 of rib member 44, within openings 46, 48, may be joined to form a knot 51. Alternatively, other abutments may be used such as commonly known mechanical connectors, e.g. a thread (e.g. stitch), plastic staple, wedge, bracket, or clip (see Fig. 10), or band. The abutment, such as the knot 51 shown in Fig. 9 abuts a smaller decreased size opening near the top portion 42 of head 38 (as shown), or abut the upper edge 45 of the rib member 44 to ensure that the head 38 will remain attached to the body 12 when a pulling force is exerted on the body, and, particularly, any of the its appendages 20, 22-24.

Referring to Figs. 10-13, in yet another form, rib member 44 may be eliminated altogether. Here, the opening 40 includes a lower edge seat 58 (illustrated in bold for clarity). The lower edge seat 58 separates opening 40 into a smaller opening 60 that is "below" the lower edge seat and is most adjacent the rope body, and a larger opening 62 that is "above" the lower edge seat. In this embodiment, upper strands 61 of upper portion 16 or even looped member 50 (not illustrated) may be inserted into both openings 60, 62 and an abutment, such as a knot, wedge, or other bracket or clip 64 may be used to keep upper portion 16 from being pulled past the lower edge seat 58 of openings 60, 62. In Fig. 10, the clip is shown to not only be larger than the lower edge seat 58, but is even shown larger than the opening at the head's top portion 42.

Referring now to Figs. 11 and 12, Fig. 11, which is a section view of the clip (not to scale as drawn), is illustrated larger than the cross-sectional area of the lower edge seat 58 (Fig. 12). Although Figs. 11 and 12 illustrate a particular geometric shape for the clip 64 and seat 58, the shapes are shown for clarity as the shape of either can be any geometric shape. The intention is that the shape of Fig. 11, which is an abutment, is larger than Fig. 12, which is the area of the seat 58.

Yet another securing means embodiment is illustrated in Fig. 13 where individual upper strands 61 of rope from the upper portion 16 of torso 14 may be overmolded with the elastomeric material of the head (discussed below). In Fig. 13, each upper strand 61 is knotted (individual knots are illustrated at numerals "68") or looped (not illustrated) and overmolded with the interior of the head 38, thus eliminating the need for openings 40, 60, 62 altogether.

Head 38 may be of any shape and may be made of any material. However, in preferred form, the head is made from natural rubber, thermo-resin, elastomeric, or other synthetic material that is molded (e.g. blow molded, injection molded, compression transfer injection, etc.) or otherwise formed and adhered around the upper portion 16. The drawings illustrate a sport ball (e.g. football, soccer ball, golf ball, hockey puck, etc.). Other head designs could be characterized as animal, human, fruit, rock formations, etc. And although it may be fun for a sports enthusiast to use a favorite sport ball pet toy to play fetch or tug-of-war with "fido" while watching a game on television, the designs are purely ornamental. I have claimed select ornamental features of my invention in my co-pending U.S. design patent applications entitled "Football Pet Toy" Serial No. 29/176,730, "Soccer Ball Pet Toy" Serial No. 29/176,724, "Golf Ball Pet Toy" Serial No. 29/176,721, "Tennis Ball Pet Toy" Serial No. 29/176,720, and "Hockey Puck Pet Toy" Serial No. 29/176,728, all filed Monday, February 24, 2003.

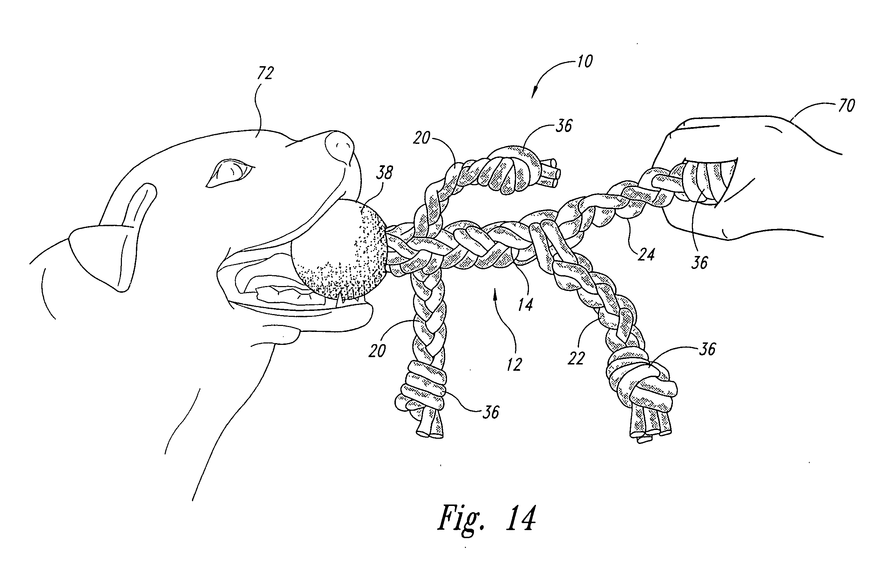

Referring to Fig. 14, in use, a pet owner 70 typically holds an appendage, such as knot 36 of leg 24 as illustrated (although other portions of the pet toy 10 can be held). For a game of fetch, the pet toy is thrown and a pet 72 retrieves the pet toy by grabbing a portion of the pet toy, such as the head 38, with the pet's teeth. The pet then returns the toy to the pet owner. For a game of tug-of-war, pet 72 grabs the pet toy, such as the head 38. The pet owner grabs another portions of the pet toy, such as a leg. Pet 72 pulls the head (or the portion of the toy that the pet has grabbed) in an opposite direction of the owner, who is holding on to another portion of the pet toy. In this way the pet gets some exercise and attention, the owner gets to bond with its pet (and possibly multitask at the same time, i.e. watch a televised sporting event), and such play allow the pet an opportunity to cleanse its teeth when the pet bites into the rope body.

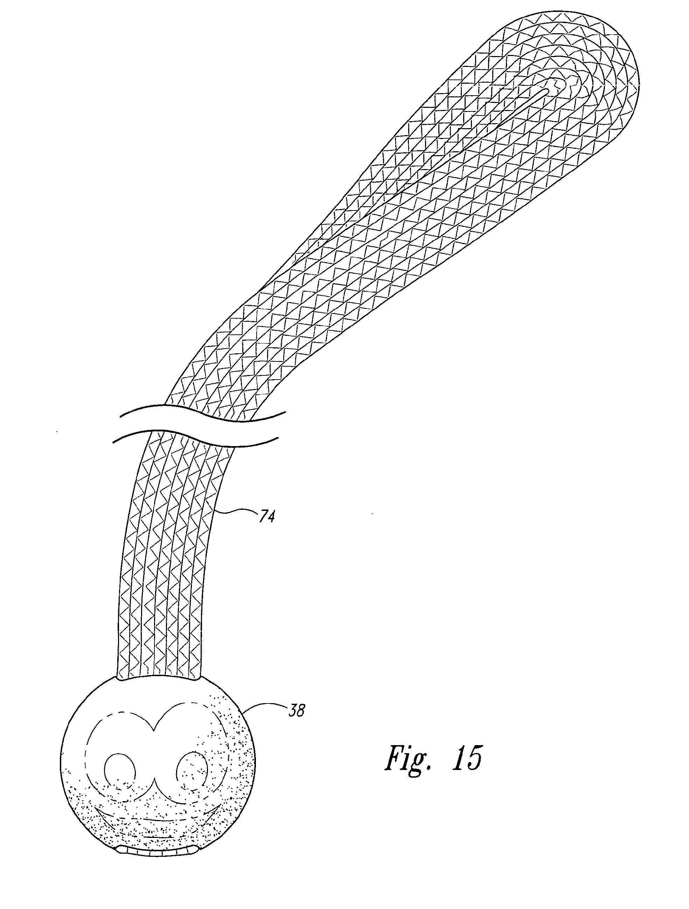

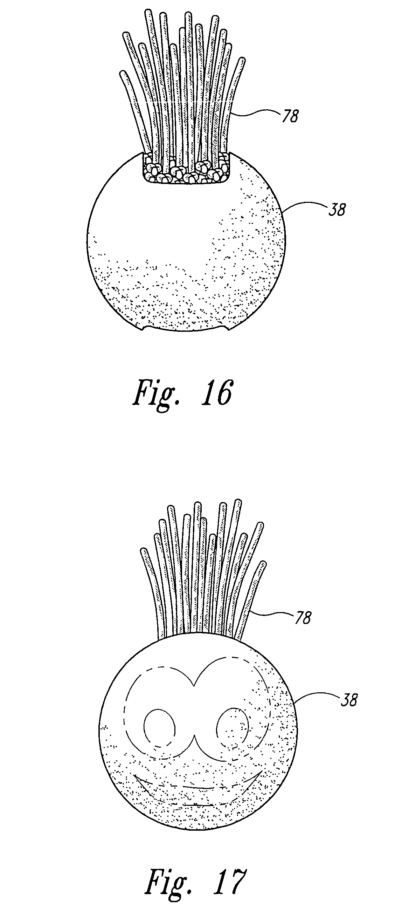

Other "woven bodies" include a woven strap 74 with an optional looped end 76 acting as a handle (Fig. 15) or a plurality of relatively short tuft of woven strands 78 (Figs. 16 and 17). In each case the woven strap 74 or tuft of woven strands 78 is securely attached to the head 38 and exits out through opening 40 and are of sufficient length to be grabbed by a person or pet. Similar to the embodiments of Figs. 1-7, a rib member may be recessed below the surface of the head.

The illustrated embodiments are only examples of the present invention and, therefore, are non-limitive. It is to be understood that many changes in the particular structure, materials, and features of the invention may be made without departing from the spirit and scope of the invention. Therefore, it is my intention that my patent rights not be limited by the particular embodiments illustrated and described herein, but rather by the following claims interpreted according to accepted doctrines of claim interpretation, including the Doctrine of Equivalents and Reversal of Parts.

## Claims

1. A pet toy comprising:
a head member having a generally central opening and a generally central rib positioned within the opening, wherein the rib has two opposing ends and the divides the central opening into two compartments; and
a plurality of woven strands positioned within the central opening and abutting one end of the rib such that the remaining strands are fixedly attached to the head at approximately where the strands extend past the other end of the rib and out through the opening, such that the now attached strands are of sufficient length to be grabable by a human or pet.

2. The pet toy according to claim 1 wherein the woven strands are a rope body having a torso with an upper portion and a lower portion, a pair of opposed rope arms extending from the torso; and a pair of rope legs extending from the lower portion of the torso.

3. The pet toy according to claim 1 wherein the woven strands are individually knotted strands.

4. The pet toy according to claim 1 wherein the woven strands form an elongated strap.

5. The pet toy according to claim 4 wherein the elongated strap further includes a looped end at the end opposite where the woven strand is attached to and extends from the head.

6. A pet toy comprising:
a head member having a generally central opening; and
woven strands attached to the head member through attachment means such that a portion of the woven strands extend out through the opening of sufficient length to be grabable by a person or pet.

7. The pet toy according to claim 6 wherein a head member further includes a generally central rib having a distal portion positioned within the opening, wherein the rib divides the central opening into at least two compartments; and
a plurality of woven strands positioned within the central opening and abutting one end of the rib such that the remaining strands are fixedly attached to the head at approximately where the strands extend past a distal portion of the rib and out through the opening, such that the now attached strands are of sufficient length to be grabable by a human or pet.

8. The pet toy according to claim 6 wherein the woven strands are a rope body having a torso with an upper portion and a lower portion, a pair of opposed rope arms extending from the torso; and a pair of rope legs extending from the lower portion of the torso.

9. The pet toy according to claim 6 wherein the woven strands are individually knotted strands.

10. The pet toy according to claim 6 wherein the woven strands form an elongated strap.

11. The pet toy according to claim 10 wherein the elongated strap further includes a looped end at the end opposite where the woven strand is attached to and extends from the head.

12. A pet toy comprising:
a woven member;
a head secured to the woven member, said head containing an opening extending in the generally axial direction of the woven member, said opening through which a rib member, having an upper edge and a lower edge, is positioned substantially transverse of where said upper portion is secured to the head, said rib member dividing said opening into two openings with the rib member positioned therebetween; and
said woven member being inserted through each of the two openings and positioned about the rib such that the remaining woven member extends through the opening and out past the head; said woven member being secured to the head about the rid by an abutment means.

13. The pet toy according to claim 12 wherein the woven member further comprises a body having multiple strands forming a torso with an upper portion and a lower portion, a pair of opposed rope arms extending from the torso; and a pair of rope legs extending from the lower portion of the torso

14. The pet toy according to claim 13 wherein the strands of the upper portion of the torso forms a loop, and wherein the abutment means is the apex of the loop abutting against the upper edge of the rib member.

15. The pet toy according to claim 13 wherein the upper strands further include loose ends, and wherein the abutment means is a knot formed from tying the loose upper strands together.

16. The pet toy according to claim 13 wherein the upper strands further includes loose ends, and wherein the abutment means is a plurality of knots formed from tying each loose end.

17. The pet toy according to claim 13 wherein the abutment means is a clip.

18. The pet toy according to claim 2 wherein the rope body is formed from a unitary, multi-strand, woven braid.

19. The pet toy according to claim 2 wherein each arm and leg include a knot distally located of the torso.

20. The pet toy according to claim 18 wherein each arm and leg include a knot distally located of the torso.
